# EUROPEAN PATENT APPLICATION

(11) **EP 4 707 855 A1**
(43) Date of publication of application: **11.03.2026**
(21) Application number: 25191885.0
(22) Date of filing: 25.07.2025
(51) Int. Cl.: G01S 7/481, G01S 17/00, G01C 3/08

(54) **BAFFLING TO MITIGATE OPTICAL CROSS-TALK BETWEEN OPTICAL RECEVER AND OPTICAL TRANSMITTER**

(30) Priority: 19.08.2024 US 202418809081
(71) Applicant: Honeywell International Inc., Charlotte, NC 28202 (US)
(72) Inventor: DOBBINS, Thomas, Charlotte, 28202 (US); WIEBOLD, Matthew, Charlotte, 28202 (US); DRASAL, Zbynek, Charlotte, 28202 (US); ALMODOVAR, Jose, Charlotte, 28202 (US); PETERSON, Timothy A., Charlotte, 28202 (US)
(74) Representative: Haseltine Lake Kempner LLP

(57) **Abstract**

An optical sensor unit for a vehicle comprises transmit optics, a transmit interface window on the vehicle, and a transmit baffle enclosure structure located in an optical path between the transmit optics and the transmit interface window. The baffle enclosure structure extends from the transmit optics to the transmit interface window without any open space. The optical sensor unit also comprises a receive interface window on the vehicle, and a set of receive optics. The transmit optics directs a light beam from a light source to the transmit interface window, through the baffle enclosure structure, for transmission of the beam to an interrogation region outside the vehicle. The receive interface window and receive optics collect a scattered portion of the beam from molecules and/or aerosol particles in the interrogation region. The baffle enclosure structure prevents reflections of the beam from the transmit interface window from reaching the receive optics.

## Description

### BACKGROUND

Flying vehicles, such as fixed-wing aircraft, rotor-craft, and the like, and corresponding flight control avionics rely in navigation on several key sensor inputs, one of which is the information from traditional pitot-static system - pneumatic sensors. Such data, denoted as air data, evaluate the aircraft-to-airstream flight conditions/status, and are critical for flight-control and situational awareness.

Amongst the full set of data, the most significant are the following: True/Computed/Indicated Airspeed (TAS/CAS/IAS), Angle-of-Attack/-Side-Slip (AoA/AoS), Static/Total Air Temperature (SAT/TAT), Pressure Altitude (H) and Mach number (M). The traditional approach by pitot-probes, however, suffer from characteristic failure modes, which historically have led to several serious flight accidents.

In general, the limitations of pitot-probes' solution can be summarized as follows: sensitivity to aircraft aerodynamic boundary layer effects, engine thrust effects, and/or direct sun exposure, leading to systematic bias in air-data evaluation to be corrected by calibration; lower accuracy at low-speed, affecting potential continuity and availability; and risk of ice formation in-flight/on-ground or accidental mechanical enclosure on-ground, both with blocking effect on pitot-static sensors, and hence the potential risk of in-flight failure. These weaknesses, leading to characteristic failure modes, can be significantly mitigated by integration of a failure modes dissimilar technology solution to aircraft, providing mitigation by optical dissimilarity, using optical sensing technologies.

An issue that can occur with using optical sensors on aircraft is that reflections from interface glass on the aircraft can result in optical cross-talk between optical receivers and optical transmitters. This may cause an unwanted zero Doppler-shift component in overall Doppler-shift measurements, and hence bias the final measurement results.

### SUMMARY

A system comprises an optical sensor unit for a vehicle, the optical sensor unit comprising a set of transmit optics, a transmit interface window on the vehicle, and a transmit baffle enclosure structure located in an optical path between the transmit optics and the transmit interface window. The transmit baffle enclosure structure extends from the transmit optics to the transmit interface window without any open space. The optical sensor unit also comprises a receive interface window on the vehicle, and a set of receive optics. The transmit optics are configured to direct a light beam from a light source to the transmit interface window, through the transmit baffle enclosure structure, for transmission of the light beam to an interrogation region outside of the vehicle. The receive interface window and the set of receive optics are configured to receive and collect a scattered portion of the transmitted light beam from molecules and/or aerosol particles in the interrogation region. The transmit baffle enclosure structure is configured to substantially prevent reflections of the light beam from the transmit interface window from reaching the receive optics.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 schematically illustrates an optical sensing system for a vehicle, according to one embodiment; and
Figure 2 schematically illustrates an optical sensing system for a vehicle, according to another embodiment.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A system to mitigate optical cross-talk between optical receivers and optical transmitters in an optical sensing systems, is described herein.

In the present approach, an optical path for the transmitter is separated from the receiver within the open space spanning between transmit/receive optics, and an interface window in a vehicle such as outside/inside interface glass in an aircraft. This approach mitigates any potential reflections from the interface window that can cause optical cross-talk between the transmit optics and the receive optics. Such optical cross-talk may cause an unwanted "zero Doppler-shift" component in overall Doppler-shift measurements, and hence bias the final measurement results.

In one embodiment, a transmit baffle structure such as a darkened tube is used to provide separation of an optical path for the transmitter from an optical path of the receiver. The transmit baffle structure can extend from the transmit optics to a transmit interface window without any open space therebetween.

In another embodiment, a receive baffle structure can be located in an optical path between a receive interface window and the receive optics, either with or without the transmit baffle structure. For example, the transmit baffle structure and the receive baffle structure can each have a cylindrical shape.

Further details of various embodiments are described hereafter and with reference to the drawings.

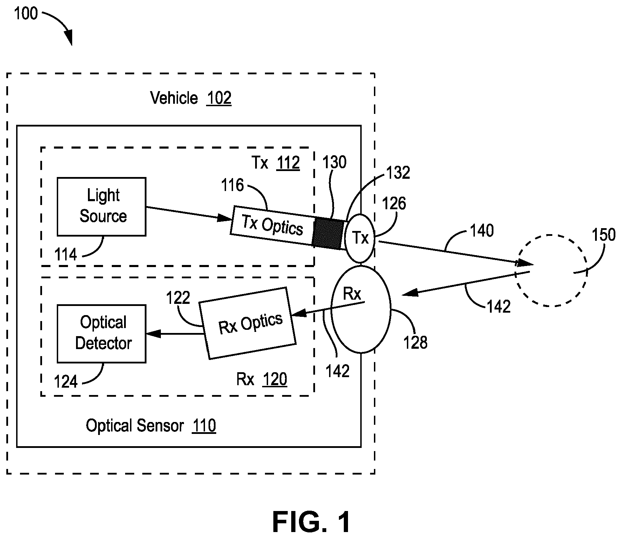

Figure 1 illustrates an optical sensing system 100 for a vehicle 102 such as an aircraft, according to one embodiment. The system 100 includes an optical sensor unit 110 generally comprising an optical transmitter (Tx) 112 and an optical receiver (Rx) 120. The optical transmitter 112 includes a light source 114 such as a laser device, and a set of transmit optics 116 in optical communication with light source 114 along a first optical path. The optical receiver 120 includes a set of receive optics 122, and an optical detector 124 in optical communication with receive optics 122 along a second optical path. In one embodiment, optical sensor unit 110 can be implemented as part of a light detection and ranging (LiDAR) device.

A transmit interface window 126 is located on vehicle 102 and is in optical communication with transmit optics 116. A receive interface window 128 is located on vehicle 102 and is in optical communication with receive optics 118. A transmit baffle enclosure structure 130 is located in an optical path between transmit optics 116 and transmit interface window 126. The transmit baffle enclosure structure 130 extends from transmit optics 116 to transmit interface window 126 without any open space.

In one embodiment, a flexible seal structure 132 can be interposed between a distal end of transmit baffle enclosure structure 130 and transmit interface window 126. The transmit baffle enclosure structure 130 can be a tubular structure, such as a black-matted tube. The transmit baffle enclosure structure 130 can be comprised of various materials, such as aluminum, titanium, steel, plastic, combinations thereof, or other like materials.

During operation, transmit optics 116 are configured to direct a light beam 140 from light source 114 to transmit interface window 126, through transmit baffle enclosure structure 130, for transmission of light beam 140 to an interrogation region 150 outside of vehicle 102. The receive interface window 128 and receive optics 122 are configured to respectively receive and collect a scattered portion 142 of the transmitted light beam from molecules and/or aerosol particles in interrogation region 150. The transmit baffle enclosure structure 130 is configured to substantially prevent reflections of light beam 140 from transmit interface window 126 from reaching receive optics 122. The optical detector 124 is configured to receive the collected scattered portion 142 through a receive channel from receive optics 122. The optical detector 124 is operative to convert the light from scattered portion 142 to an electrical signal that is proportional to the intensity of the light. This allows optical detector 124 to measure an optical response to produce measurement data for further processing.

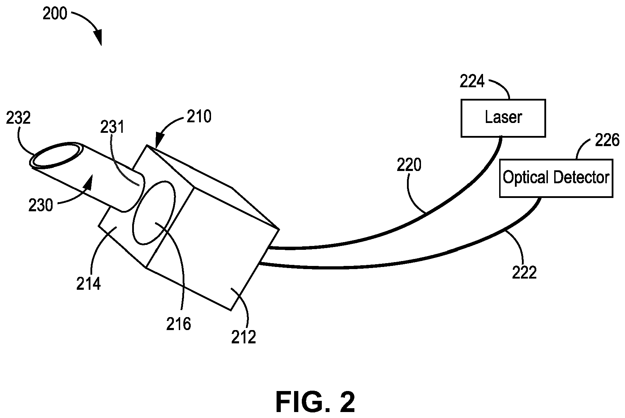

Figure 2 illustrates an optical sensing system 200 for a vehicle such as an aircraft, according to another embodiment. The optical sensing system 200 includes a transmit-receive optical head 210 having a housing 212, which encloses a set of transmit optical components and a set of receive optical components (e.g., transmit and receive optics). An outer surface 214 of housing 212 has a receive window 216 that is in optical communication with the receive optical components in optical head 210. In one embodiment, receive window 216 can have an oval or elliptical shape, such as shown in Figure 2.

At least one transmit optical fiber 220 is in optical communication with the transmit optical components in optical head 210, and at least one receive optical fiber 222 is in optical communication with the receive optical components in optical head 210. The transmit optical fiber 220 is optically coupled to an output of a laser device 224, and the receive optical fiber 222 is optically coupled to an input of an optical detector 226. In one embodiment, optical sensing system 200 can be implemented in a LiDAR device.

A transmit baffle enclosure structure 130 extends from outer surface 214 of housing 212. A proximal end 231 of transmit baffle enclosure structure 230 is coupled to an opening in outer surface 214 for an optical path of the transmit optical components in optical head 210. A distal end 232 of transmit baffle enclosure structure 230 is configured to be coupled to a transmit interface window of a vehicle such as an aircraft (not shown). The transmit baffle enclosure structure 230 extends from outer surface 214 to the transmit interface window without any open space therebetween.

In some embodiments, transmit baffle enclosure structure 230 can be a tubular or cylindrical structure that has sufficient strength, rigidity, and thermal stability to withstand vibrations from a moving vehicle such as an aircraft. In one embodiment, transmit baffle enclosure structure 230 is a tubular structure having an elliptical shaped cross section. The distal end 232 of transmit baffle enclosure structure 230 can have an oblique angle with respect to proximal end 231, such that distal end 232 is flush with the transmit interface window when transmit baffle enclosure structure 230 is installed.

In some embodiments, transmit baffle enclosure structure 230 can be press fit between outer surface 214 and a frame surrounding the transmit interface window. For example, proximal end 231 can be press fitted within the opening in outer surface 214, and distal end 232 can be press fitted within the frame surrounding the transmit interface window, such that no fasteners such as screws are needed to secure transmit baffle enclosure structure 230 in place. In some embodiments, a flexible seal structure can be interposed between distal end 232 of transmit baffle enclosure structure 230 and the transmit interface window.

The transmit baffle enclosure structure 230 can be composed of aluminum, titanium, steel, plastic, combinations thereof, or other like material. For example, in one embodiment, transmit baffle enclosure structure 230 can be formed with a tube of black anodized aluminum. The black color of the tube aids in absorbing transmitted light.

During operation, a light beam from laser device 224 is sent to optical head 210 through transmit optical fiber 220. The transmit optical components in optical head 210 are configured to direct the light beam to the transmit interface window of the vehicle, through transmit baffle enclosure structure 230, for transmission of the light beam to an interrogation region outside of vehicle. The transmit baffle enclosure structure 230 is configured to substantially prevent reflections of the light beam from the transmit interface window from reaching the receive window 216.

The receive window 216 and the receive optical components in optical head 210 are configured to receive and collect a scattered portion of the transmitted light beam from molecules and/or aerosol particles in the interrogation region. The optical detector 226 is configured to receive the collected scattered portion of the light beam through receive optical fiber 222 for further processing.

### Example Embodiments

Example 1 includes a system comprising: an optical sensor unit for a vehicle, the optical sensor unit comprising: a set of transmit optics; a transmit interface window on the vehicle; a transmit baffle enclosure structure located in an optical path between the transmit optics and the transmit interface window, such that the transmit baffle enclosure structure extends from the transmit optics to the transmit interface window without any open space; a receive interface window on the vehicle; and a set of receive optics; wherein the transmit optics are configured to direct a light beam from a light source to the transmit interface window, through the transmit baffle enclosure structure, for transmission of the light beam to an interrogation region outside of the vehicle; wherein the receive interface window and the set of receive optics are configured to receive and collect a scattered portion of the transmitted light beam from molecules and/or aerosol particles in the interrogation region; wherein the transmit baffle enclosure structure is configured to substantially prevent reflections of the light beam from the transmit interface window from reaching the receive optics.

Example 2 includes the system of Example 1, further comprising a flexible seal structure that is interposed between a distal end of the transmit baffle enclosure structure and the transmit interface window.

Example 3 includes the system of any of Examples 1-2, wherein the transmit baffle enclosure structure comprises a black-matted tubular structure.

Example 4 includes the system of any of Examples 1-3, wherein the transmit baffle enclosure structure is a cylindrical structure having an elliptical shaped cross section.

Example 5 includes the system of any of Examples 1-4, wherein the transmit baffle enclosure comprises aluminum, titanium, steel, plastic, or combinations thereof.

Example 6 includes the system of any of Examples 1-4, wherein the transmit baffle enclosure comprises black anodized aluminum.

Example 7 includes the system of any of Examples 1-6, wherein the vehicle is an aircraft.

Example 8 includes the system of any of Examples 1-7, wherein the optical sensor unit is implemented as part of a light detection and ranging (LiDAR) device.

Example 9 includes a system comprising: an optical head including a housing that encloses a set of transmit optical components and a set of receive optical components; at least one transmit optical fiber in optical communication with the transmit optical components; a laser device optically coupled to the at least one transmit optical fiber; at least one receive optical fiber in optical communication with the receive optical components; an optical detector optically coupled to the at least one receive optical fiber; a receive window on an outer surface of the housing and in optical communication with the receive optical components; and a transmit baffle enclosure structure having a proximal end coupled to the outer surface of the housing and in optical communication with the transmit optical components, wherein a distal end of the transmit baffle enclosure structure is configured to be coupled to a transmit interface window of a vehicle, the transmit baffle enclosure structure configured to extend from the outer surface of the housing to the transmit interface window without any open space therebetween; wherein the laser device is configured to send a light beam to the optical head through the at least one transmit optical fiber; wherein the transmit optical components in the optical head are configured to direct the light beam to the transmit interface window of the vehicle, through the transmit baffle enclosure structure, for transmission of the light beam to an interrogation region outside of the vehicle; wherein the transmit baffle enclosure structure is configured to substantially prevent reflections of the light beam from the transmit interface window from reaching the receive window.

Example 10 includes the system of Example 9, wherein: the receive window and the receive optical components are configured to receive and collect a scattered portion of the transmitted light beam from molecules and/or aerosol particles in the interrogation region; and the optical detector is configured to receive the collected scattered portion of the light beam through the at least one receive optical fiber.

Example 11 includes the system of any of Examples 9-10, further comprising a flexible seal structure that is interposed between the distal end of the transmit baffle enclosure structure and the transmit interface window.

Example 12 includes the system of any of Examples 9-11, wherein the transmit baffle enclosure structure comprises a black-matted tubular structure.

Example 13 includes the system of any of Examples 9-12, wherein the transmit baffle enclosure structure comprises a cylindrical structure having an elliptical shaped cross section.

Example 14 includes the system of any of Examples 9-13, wherein the transmit baffle enclosure structure comprises aluminum, titanium, steel, plastic, or combinations thereof.

Example 15 includes the system of any of Examples 9-13, wherein the transmit baffle enclosure structure comprises black anodized aluminum.

Example 16 includes the system of any of Examples 9-15, wherein the transmit baffle enclosure structure is press fit between the housing and a frame of the transmit interface window.

Example 17 includes the system of any of Examples 9-16, wherein the distal end of the transmit baffle enclosure structure has an oblique angle with respect to the proximal end of the transmit baffle enclosure structure, such that the distal end is flush with the transmit interface window.

Example 18 includes the system of any of Examples 9-17, wherein the vehicle is an aircraft.

Example 19 includes the system of any of Examples 9-18, wherein the system is implemented as part of a light detection and ranging (LiDAR) device.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A system comprising:
an optical sensor unit for a vehicle, the optical sensor unit comprising:
a set of transmit optics;
a transmit interface window on the vehicle;
a transmit baffle enclosure structure located in an optical path between the transmit optics and the transmit interface window, such that the transmit baffle enclosure structure extends from the transmit optics to the transmit interface window without any open space;
a receive interface window on the vehicle; and
a set of receive optics;
wherein the transmit optics are configured to direct a light beam from a light source to the transmit interface window, through the transmit baffle enclosure structure, for transmission of the light beam to an interrogation region outside of the vehicle;
wherein the receive interface window and the set of receive optics are configured to receive and collect a scattered portion of the transmitted light beam from molecules and/or aerosol particles in the interrogation region;
wherein the transmit baffle enclosure structure is configured to substantially prevent reflections of the light beam from the transmit interface window from reaching the receive optics.

2. The system of claim **1,** further comprising a flexible seal structure that is interposed between a distal end of the transmit baffle enclosure structure and the transmit interface window.

3. The system of claim 1, wherein the transmit baffle enclosure structure comprises a black-matted tubular structure.

4. The system of claim 1, wherein the transmit baffle enclosure structure is a cylindrical structure having an elliptical shaped cross section.

5. The system of claim 1, wherein the transmit baffle enclosure comprises aluminum, titanium, steel, plastic, or combinations thereof.

6. The system of claim 1, wherein the transmit baffle enclosure comprises black anodized aluminum.

7. The system of claim 1, wherein the vehicle is an aircraft.

8. The system of claim 1, wherein the optical sensor unit is implemented as part of a light detection and ranging (LiDAR) device.

9. A system comprising:
an optical head including a housing that encloses a set of transmit optical components and a set of receive optical components;
at least one transmit optical fiber in optical communication with the transmit optical components;
a laser device optically coupled to the at least one transmit optical fiber;
at least one receive optical fiber in optical communication with the receive optical components;
an optical detector optically coupled to the at least one receive optical fiber;
a receive window on an outer surface of the housing and in optical communication with the receive optical components; and
a transmit baffle enclosure structure having a proximal end coupled to the outer surface of the housing and in optical communication with the transmit optical components, wherein a distal end of the transmit baffle enclosure structure is configured to be coupled to a transmit interface window of a vehicle, the transmit baffle enclosure structure configured to extend from the outer surface of the housing to the transmit interface window without any open space therebetween;
wherein the laser device is configured to send a light beam to the optical head through the at least one transmit optical fiber;
wherein the transmit optical components in the optical head are configured to direct the light beam to the transmit interface window of the vehicle, through the transmit baffle enclosure structure, for transmission of the light beam to an interrogation region outside of the vehicle;
wherein the transmit baffle enclosure structure is configured to substantially prevent reflections of the light beam from the transmit interface window from reaching the receive window.

10. The system of claim 9, wherein:
the transmit baffle enclosure structure is press fit between the housing and a frame of the transmit interface window; and
the distal end of the transmit baffle enclosure structure has an oblique angle with respect to the proximal end of the transmit baffle enclosure structure, such that the distal end is flush with the transmit interface window.
